# EUROPEAN PATENT SPECIFICATION

(11) **EP 0 762 709 B1**
(45) Date of publication and mention of the grant of the patent: **29.11.2006**
(21) Application number: 96306624.6
(22) Date of filing: 12.09.1996
(51) Int. Cl.: H04M 1/27

(54) **Method and system for enrolling addresses in a speech recognition database**
System und Verfahren zur Aufnahme von Namen in einer Spracherkennungsdatenbank
Méthode et système d'introduction de noms dans une base de données avec reconnaissance de la parole

(30) Priority: 12.09.1995 US 3593
(43) Date of publication of application: 12.03.1997
(73) Proprietor: TEXAS INSTRUMENTS INCORPORATED, Dallas, Texas 75265 (US)
(72) Inventor: Gammel, Michele B., Farmers Branch, TX 75244 (US); Fisher, Thomas D., Dallas, TX 75359-6891 (US)
(74) Representative: Legg, Cyrus James Grahame

(56) References cited:
- EP-A- 0 398 574
- EP-A- 0 618 710
- US-A- 4 802 231
- PATENT ABSTRACTS OF JAPAN vol. 018, no. 674 (P-1846), 19 December 1994 (1994-12-19) & JP 06 266386 A (NIPPON TELEGR & TELEPH CORP), 22 September 1994 (1994-09-22)

## Description

### TECHNICAL FIELD OF THE INVENTION

This invention relates to speech recognition and more particularly to enrollment of speech recognition addresses in a speech recognition database.

### BACKGROUND OF THE INVENTION

The enrollment of name addresses in a speech recognition database is used in speed dialing. Speed dialing is where, for example, a certain number or bank of telephone numbers are pre-stored and the user only has to address that bank of numbers by saying a name to have the telephone number called. It is highly desirable that the user speed dial by speaking the addresses by name into the telephone and the telephone number associated with that name in the bank of telephone numbers is dialed up. It is desirable therefore to provide some improved method and system for enrolling the speed dial name addresses into the telephone system so that the correct numbers will be dialed when spoken into the telephone system.

JP-A-06 266386 discloses a system to detect a keyword in an input speech precisely at a high speed in synchronisation with the time of the input speech.

### SUMMARY OF THE INVENTION

In accordance with the present invention there is provided a method of enrolling speed dial names in a telephone comprising: providing a garbage model; assigning a penalty to the garbage model; receiving an utterance of a new speed dial name from a user; comparing the utterance with the penalized garbage model and templates of previously added speed dial names to determine whether the utterance is too similar to a previously added speed dial name; and responsive to the first utterance not being too similar to a previously added speed dial name, enrolling the new speed dial name in a speed dial list.

In accordance with the present invention there is further provided a telephone apparatus including circuitry for enrolling speed dial names, the circuitry comprising: a memory for storing a speed dial list, including a plurality of templates for previously added speed dial names, and for storing a garbage model for speech recognition; and a processor, programmed to perform a sequence of operations comprising: assigning a penalty to the garbage model; receiving an utterance of a new speed dial name from a user; comparing the utterance with the penalized garbage model and stored plurality of templates to determine whether the first utterance is too similar to a previously added speed dial name; and responsive to the utterance not being too similar to a previously added speed dial name, enrolling the new speed dial name in a speed dial list.

### DESCRIPTION OF THE DRAWINGS

The present invention will now be further described, by way of example, with reference to the accompanying drawings in which:
Fig. 1 illustrates a simplified block diagram of a telephone system that implements a method of the present invention;
Fig. 2 illustrates a flow diagram of a method for generating multi-user spoken speed dial directions in the voice recognition telephone system;
Fig. 3 illustrates a general flow diagram of enrolling and deleting a directory name within the telephone system;
Fig. 4 illustrates a flow diagram of a method for enrolling and modifying a speed dial list corresponding to a directory name in the telephone system;
Fig. 5 is a flow chart of voice dial add entry according to one embodiment of the present invention;
Fig. 6 illustrates a single garbage model;
Fig. 7 is a flow chart of voice dial add entry enroll in Fig. 5;
Fig. 8 is a flow chart of voice dial add entry update in Fig. 7; and
Fig. 9 is a flow chart for voice dial add entry retry in Fig. 8.

### DETAILED DESCRIPTION OF THE INVENTION

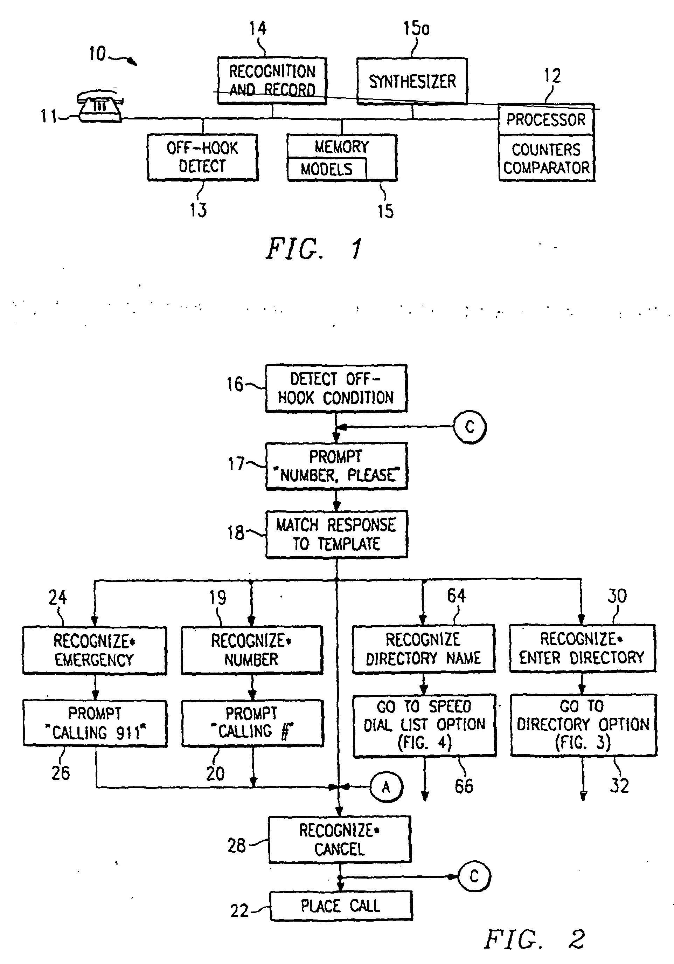

FIGURE 1 is a simplified block diagram of a telephone system 10. Telephone system 10 includes a telephone 11 that connects to a processor 12. An off-hook detect circuit 13 and a recognition and record circuit 14 connect to telephone 11 and processor 12. Processor 12 also connects to a memory 15. In operation, off-hook detect circuit 13 informs processor 12 that telephone 11 indicates an off-hook condition and allows processor 12 to monitor commands according to a program stored within and executed by processor 12. The program within processor 12 allows a user to generate a directory name address and a speed dial list of entry names and corresponding phone numbers associated with the directory name address. Telephone system 10 stores speaker dependent templates of the directory name address.and associated entry names and phone numbers such that each user can access only this specific directory name and speed dial list.

FIGURE 2 is an initial flow diagram of a method for generating multi-user spoken speed dial directories in voice recognition telephone system 10. The processor 12 in one embodiment is programmed according to this flow diagram. Off-hook detect circuit 13 of telephone system 10 monitors telephone 11 at step 16 to detect an off-hook condition on the specific telephone. Once detection of an off-hook condition occurs, processor 12 prompts a user to input a command at step 17. At step 18, processor 12 in conjunction with recognition and record circuit 14 which may include processor including a comparator and memory 15 compares the user's response to one of a plurality of templates encoded into memory 15 of telephone system 10. The flexibility of telephone system 10 allows for receiving at step 18 either spoken words from a user or, in some instances, corresponding DTMF push button codes from telephone 11 representing spoken command words. Throughout the drawings, an asterisk indicates that telephone system 10 can recognize either spoken command words or corresponding DTMF push button codes representing the command words. Asterisks also indicate that telephone system 10 performs speaker independent speech recognition in matching a model to a user's response. For illustrative purposes only, the description of the preferred embodiment shall proceed as though the telephone system receives spoken responses instead of representative commands through corresponding DTMF push button codes.

At step 18, telephone system 10 may recognize one of various command phrases and proceed according to the requested command. Telephone system 10 may recognize a telephone number at step 19 received from a user as a first command. Telephone system 10 informs the user at step 20 of the number received and the sequence will continue to step 22 where the telephone number will be automatically dialed in order to place the requested call. Telephone system 10 may also recognize an emergency command at step 24, such as "help", as a second command phrase received from the user. Telephone system 10 notifies the user at step 26 that the emergency telephone number, such as 911, is being dialed and the sequence proceeds to step 22 where once again the call will be placed. The telephone system may also recognize a third command phrase, CANCEL, from the user which automatically returns the telephone system to step 17, ceasing any command sequence currently in progress. For example, as shown in FIGURE 1, the user may halt the placement of a telephone call prior to a connection being made at the other end of the telephone line. Though shown at only one point in FIGURE 1, the recognition of a CANCEL command at step 28 may occur anywhere within the telephone system method described in reference to subsequent figures.

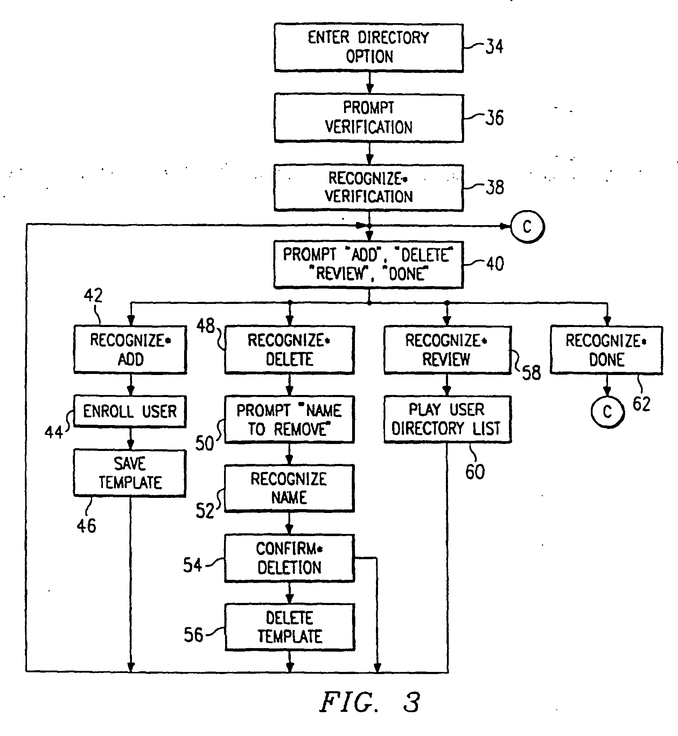

Telephone system 10 may recognize a fourth command word at step 30 when the user requests to enter the user directory list. When telephone system 10 recognizes this command, the process flows to step 32 to allow the user to enter the directory option. FIGURE 3 illustrates a flow diagram of the process steps in the directory option portion of the telephone system program. Upon command recognition, the user enters the directory option at step 34. To ensure that only authorized users may enter the directory option, telephone system 10 implements security measures at steps 36 and 38, requiring the user to provide a verification of the authority to enter the directory option. The verification may be an authorization code that the user inputs into the system or there may be speaker dependent speech recognition templates to match the user's speech patterns to verification templates stored within telephone system 10.

At step 36, telephone system 10 prompts the user for the proper verification and recognizes the user's verification response at step 38. Telephone system 10 may perform steps 36 and 38 more than one time as part of the verification process. If the telephone system does not recognize the verification code given by the user, process flow returns to step 17 of FIGURE 2 in a similar manner as a CANCEL command. If telephone system 10 recognizes a valid verification code, process flow continues to step 40 where telephone system 10 prompts the user to input one of four commands for the directory option. Also see Kero, U. S. Patent No. 5,369,685 for user verification.

Once the user has provided the appropriate verification and enters the directory option, telephone system 10 may recognize a first subcommand word at step 42 to add a user directory name to the system. Telephone system 10 enrolls the user at step 44 by requesting a directory name and saving the user's response in a template at step 46 to be stored within the telephone system. In enrolling a user directory name, telephone system 10 may repeat steps 44 and 46 in order to create the template and save it with the existing list of user identification templates already registered for that account or telephone. Once a template is saved, process flow returns to step 40 where telephone system 10 prompts the user for another command word.

Telephone system 10 may recognize a second subcommand word at step 48 to delete a user directory name. When recognized, telephone system 10 prompts the user at step 50 for the name of the user directory to delete. Telephone system 10 recognizes the directory name given by the user at step 52 and requests the user to confirm the deletion of the directory name at step 54. If the user does not confirm deletion of the directory name, process flow returns to step 40 where telephone system 10 prompts the user for a command phrase. If the user does confirm deletion of the directory name at step 54, telephone system 10 deletes the template at step 56 created for that directory name and any telephone list entries corresponding to that directory name. Once deleted, process flow returns to step 40 where telephone system 10 prompts the user for a new command phrase.

Telephone system 10 may recognize a third subcommand phrase at step 58 to review the list of directory names. When recognized, telephone system 10. plays the user directory list at step 60 before returning to step 40 to request a new command phrase. Telephone system 10 may also recognize a fourth command phrase at step 62, determining that the user has completed the directory option request. When recognized, process flow returns to step 17 of FIGURE 2 where telephone system 10 prompts the user for a telephone number.

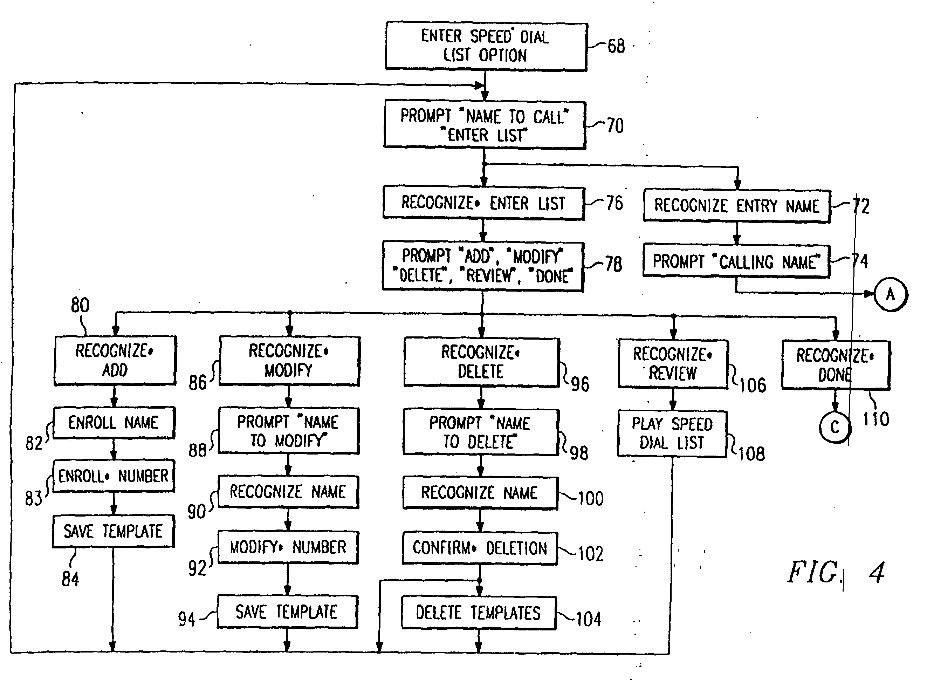

Returning to FIGURE 2, telephone system 10 may recognize a directory name at step 64 as a fifth command phrase. When telephone system 10 recognizes a user directory name, process flow proceeds to step 66 where the telephone system enters a speed dial list option. FIGURE 4 is a flow diagram of the speed dial list option process of the present invention. Telephone system 10 enters the speed dial list option at step 68 and subsequently prompts the user at step 70 to either request a name to call or enter the list. When telephone system 10 recognizes an entry name at step 72, a prompt is given to the user at step 74, indicating the requested name to be called by telephone system 10. Telephone system 10 then places the call at step 22 in FIGURE 2 as previously described. Telephone system 10 may also recognize and enter a list command at step 76 and prompt the user for one of five list command phrases at step 78. Telephone system 10 may recognize a first list command phrase at step 80 to add an entry name and phone number to the speed dial list under the user's directory name. When recognized, telephone system 10 prompts the user at step 82 to enroll the entry name into the speed dial list. Telephone system 10 prompts the user at step 83 to enroll a phone number corresponding to the entry name just enrolled at step 82. Telephone system 10 creates and saves a template corresponding to the name and phone number enrolled by the user at step 84. Telephone system 10 may repeat steps 82, 83, and 84 in order to verify and create a valid template of the entry name and phone number for the speed dial list. Once saved, process flow returns to the beginning of the speed dial list option routine at step 70.

Telephone system 10 may recognize a second list command at step 86 to modify a phone number corresponding to an entry name. When recognized, telephone system 10 prompts the user at step 88 to provide the name whose phone number is to be modified. Telephone system 10 recognizes the name given by the user at step 90 and allows the user to modify the telephone number corresponding to that name at step 92. Telephone system 10 saves a template of the modified number corresponding to the entry name with which modification was requested at step 94. Telephone system 10 may repeat steps 92 and 94 to ensure valid creation of the telephone number template. Once the template is saved, process flow returns to step 70 as previously described.

Telephone system 10 may recognize a third list command at step 96 to delete a name from the-speed dial list. When recognized, telephone system 10 prompts the user at step 98 for the name to be deleted from the speed dial list. Telephone system 10 recognizes the name at step 100 and requests the user to confirm deletion of the name at step 102. If the user does not wish to delete the entry name, process flow returns to step 70. If the user does confirm deletion of the entry name, the telephone system deletes the entry name template and corresponding phone number template at step 104 before routing the process flow back to step 70.

Telephone system 10 may recognize a fourth list command phrase at step 106 to allow a user to review his speed dial list. When recognized, telephone system 10 plays the user's speed dial list at step 108 and returns process flow back to step 70.

Telephone system 10 may also recognize a fifth list command phrase at step 110, indicating that the user has completed the speed dial list option. When recognized, process flow returns to step 17 of Fig. 2 and the method repeats as previously described.

In summary, a telephone system may generate a separate directory for each authorized user of the telephone system. Each user may create a speed dial list containing names and phone numbers under the user's own directory. By using speaker dependent features, no one can gain access to an authorized user's directory or speed dial list. The above is by way of background to enrollment of speed dial names using voice recognition.

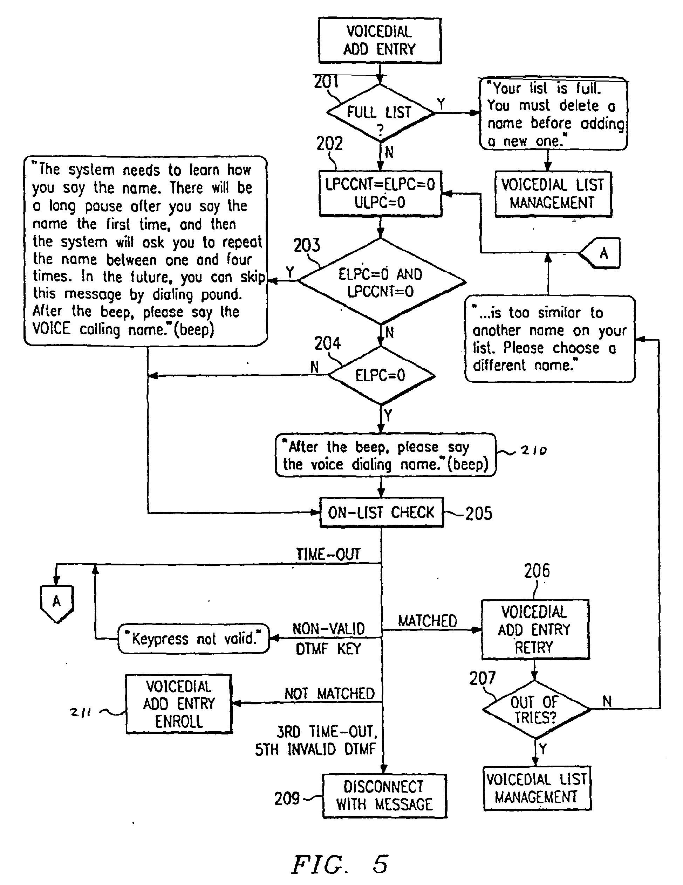

The processor 12 in Fig. 1, according to one embodiment of the present invention, is programmed to operate according to the flow chart of Fig. 5 to enroll speed dial names into a speed dial list. The processor 12 includes ELPC and ULPC counter and it allows a subscriber to create a base phrase and then update it. The subscriber is allowed three chances to say the spoken name to get it into a list in a manner to best recognize the spoken name. The system also addresses the problem of the subscriber adding a name to the list that is either already on the list or add a very similar name to the list. It also addresses the problem of the subscriber saying the name too differently as it is enrolled and updated.

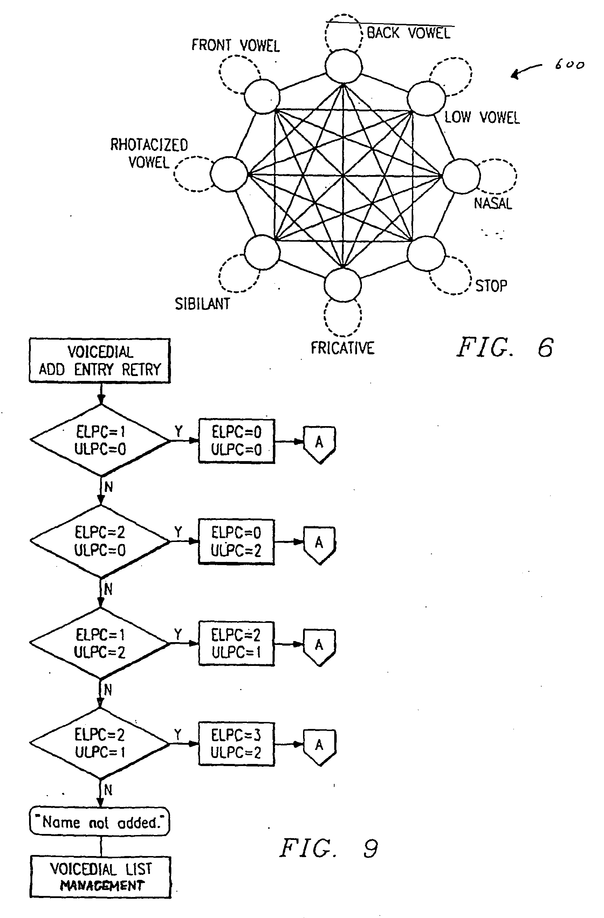

Recent developments in the use of garbage models to determine out-of vocabulary speech have given rise to new recognition process that provide an out-of-vocabulary recognition capability as well as preserving a high rate of in-vocabulary recognition. This new recognition process utilizes a penalized garbage model in parallel with spoken speed dialing names to discriminate out-of-vocabulary speech. This approach is applied to spoken speed dialing enrollment recognition to address the problem of enrollment of names already on a speed dial list and too much variability during enrollment. A "garbage model" is defined as a model for any speech which may be words or sounds for which no other model exists within the recognition system. There are several possibilities for means of constructing garbage models. A single garbage model commonly used in state-of-the art recognition, shown in Fig. 6 models a collection of broad phonetic classes of speech sounds which are linked too form sounds making up a word. As shown in Fig. 6 the circles represent the acoustic broad phonetic classes. The solid lines indicate transitions that may be made in either direction from one broad phonetic class to another. The dotted lines indicate that the model may loop on a particular state. Transitions are weighted by probabilities based on temporal phonotactic constraints. These constraints require that the longer a given phonetic class is used to explain speech, the less likely the class will be used to explain speech, the less likely the class will be used to explain subsequent speech, and the more likely subsequent speech will be explained by other different phonetic classes. The model may begin explaining speech by entering or leaving at any state.

During similar name checking, recognition is performed with the new name being added to the list. The new name can either match an existing name on the list, or match the parallel garbage model. If the name matches an existing name, then the user is informed that the name or a similar name is already on the list, and that the name will not be added. If the new name matches the parallel garbage model, then it is assumed that the name is not on the list and the addition of the name continues. The penalty on the garbage model can be adjusted to affect the sensitivity to matching either a name on the list or to the garbage model.

The subscriber when trying to enroll a new name to the speed dial list enters a menu entitled "Voice Dial List Management" or position 40 in Fig. 3 or 78 in Fig. 4," and enters or says "Add Entry". When this command is recognized the system first checks at step 201 whether or not the list is full. If it is full, the system notifies user it is full. This can be done by a synthesized voice command from memory 15 and synthesizer 15a that states, "Your list is full. You must delete a name before adding a new one." The user may return to the List Management and delete a name on the list. See steps 96-104 in Fig. 4. If the list is full or after deleting a name on the list and returning to "Add Entry LPCCNT" ELPC and ULPC counters are set to zero (step 202). The system will then keep count of the Enrollment LPC (Linear Predictive Coding) or ELPC and the Update Linear Predictive Coding (ULPC) counts. The LPC is a speech sample represented by linear prediction parameters. LPC is assumed to be linear. For more on LPC, for example, see pages 81-124 on "Linear Predictive Coding of Speech" by Bishnu S. Ital (Chapter 4) in "Computer Speech Processing", edited by Frank Fallside and William Woods, Prentice Hall (ISBN 0-13-163841-6). If the count of ELPC and ULPC are both zero (step 203) indicating that nothing has been entered before, a tutorial, synthesized prompt statement is played (decision "yes" at step 203). The synthesized statement may say,

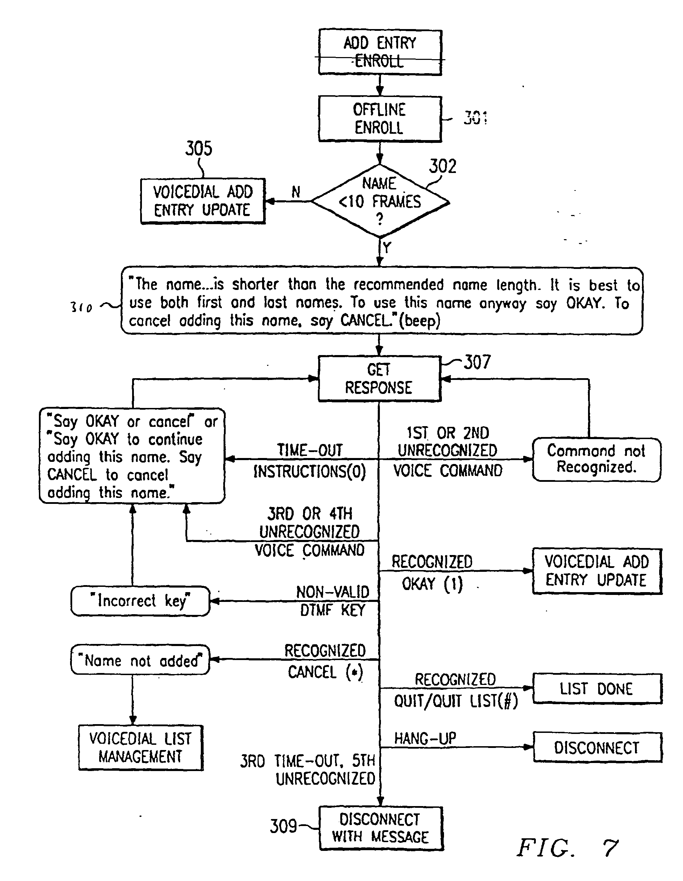

"The system needs to learn how you say the name. There will be a long pause after you say the name the first time, and then the system will ask you to repeat the name between one and four times. In the future, you can skip this message by dialing pound. After the beep, please say the voice calling name." (a beep sounds at the end for the user to say the name.) The user says the name. A check is made at step 205 to determine if the name is already on the list of fifteen (for example) names listed or close to a name or matches the garbage model. If there is a match to that on the list (indicating a similar name already in the list) the system enters the Add Entry Retry of step 206. If out of retries is "yes" (step 207) then the system goes back to the menu of voice dial list management or position 40 in Fig. 3 or 78 in Fig. 4. If not out of tries ("no" at step 207) the system plays via the synthesizer 15a a "too similar" message ("... is too similar to another name on your list. Please choose a different name") and increments the ELPC counter 202 shown on Fig. 5 and uses the shorter prompt ("After the beep, please say the voice dialing name") to try again. If the user does not give a new name in time, the system times out, increments the counter and requests a new name. If a key on the keyboard is pressed that is not valid and/or after a time out, the system increments the counter at step 202 and asks for a spoken name. If the system fails to enroll after three tries or fifth invalid DTMF key, the system disconnects (step 209). If the spoken name is not matched the system goes to the "Add Entry Enroll" of Fig. 7.

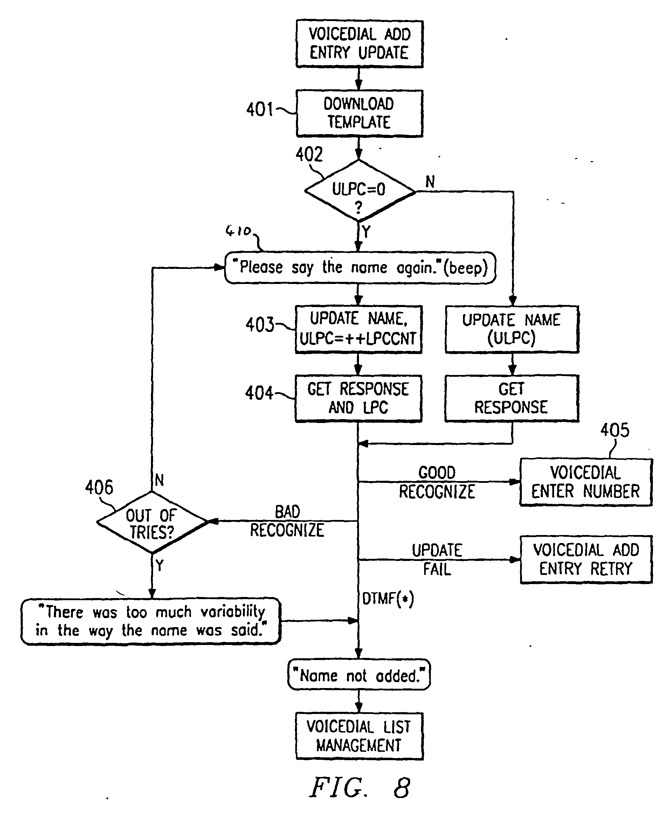

After a successful saying of a name that isn't matched at Add Entry Enroll in Fig. 5 the system follows the flow chart of Fig. 6. The utterance is stored when we start the on-line enrollment. The saved utterance is used to create a template (step 301) by performing an off-line enrollment. If the length of the utterance is not too short such as greater than or equal to a minimum threshold such as, for example, ten frames of data ("no" at step 302) the system proceeds to step 305 to add entry update and follows the flow chart of Fig. 8. If the message is too short or less, than the minimum threshold (less than ten (10) frames of data for the example) ("yes" at step 302), the system asks via the synthesizer if the user wants to use the template even if it hasn't been used before. If "yes" meaning less than the minimum threshold, the prompt message may state:

"The name [name given] is shorter than the recommended name length. It is best to use both first and last names. To use this name anyway say OKAY. To cancel adding this name, say CANCEL."

This is followed by a beep prompt. If "OKAY" is received at response step 307, the system proceeds to Add Entry Update of Fig. 8. If "CANCEL" is received, a synthesized statement is generated and provided such as, "Name not added" and the system proceeds back to the Voice List Management Menu or position 40 in Fig. 3 or 78 in Fig. 4. If nothing is said (time out), an unrecognized command or an incorrect key is pressed the system provides synthesized instructions and goes back to looking for a response. If after five times there is not a recognized response or after three time outs, the system is disconnected with a message (step 309). If a DTMF key is pressed the synthesizer provides the message "Incorrect Key". After each time out, each wrong key and after the third and forth unrecognized voice command the synthesizer may state, "Say OK or Cancel" or for more detailed instructions, "Say okay to continue adding this name. Say cancel to cancel adding this name." If "OKAY" is recognized even if a short name, the system proceeds to the Add Entry Update of Fig. 8.

In determining the recognize the system uses the garbage model with penalties listed below.
start__garbage_pssd).
_garbage_pssd, 0.6 --> _rhot, s1_rhot.
_garbage_pssd, 0.6 --> _backv, s1_backv.
_garbage_pssd, 0.6 --> _frontv, s1_frontv.
_garbage_pssd, 0.6 --> _fric, s1_fric.
_garbage_pssd, 0.6 --> _nasal, s1_nasal.
_garbage_pssd, 0.6 --> _stop, s1_stop.
_garbage_pssd, 0.6 --> _sib, s1_sib.
_garbage_pssd, 0.6 --> _lowv, s1_lowv.
s1_rhot, 6e-06 --> ''''.
s2_rhot, 0.06 --> "".
s3_rhot, 0.6 --> "".
s1_backv, 6e-06 --> "".
s2_backv, 0.06 --> ''''.
s3_backv, 0.18 --> "".
s4_backv, 0.3 --> ''''.
s5_backv, 0.6 --> "".
s1_frontv, 6e-06 --> ''''.
s2_frontv, 0.06 --> ''''.
s3_frontv, 0.18 --> ''''.
s4_frontv, 0.3 --> ''''.
s5_frontv, 0.6 --> "".
s1_fric, 6e-06 --> ''''.
s2_fric, 0.06 --> "".
s3_fric, 0.18 --> "".
s4_fric, 0.3 --> "".
s5_fric, 0.6 --> ''''.
s1_nasal, 6e-06 -->''''.
s2_nasal, 0.06 --> "".
s3_nasal, 0.6 --> ''''.
s1_stop, 6e-06 --> "".
s2_stop, 0.06 --> "".
s3_stop, 0.6 --> "".
s1_sib, 6e-06 --> ''''.
s2_sib, 0.06 --> "".
s3_sib, 0.18 --> "".
s4_sib, 0.3 --> ''''.
s5_sib, 0.6 --> "".
s1_10wv, 6e-06 --> ''''.
s2_lowv, 0.06 --> ''''.
s3_lowv, 0.18 --> "".
s4_lowv, 0.3 --> "".
s5_lowv, 0.6 --> "".
If the received template has a high score for any of the listed garbage models it receives a high score for unrecognizable speech and is rejected as unrecognized speech.

Referring to Fig. 8 the template is downloaded (step 401) and the system determines if there has been an update. During update, the garbage model is used to explain speech that is not in the enrollment template. For instance, if, during enrollment the user said "uh, Roger Rabbit", then the garbage model explains the "uh" (a gasp), and only the "Roger Rabbit" portion of the update utterance is averaged into the new name template. If the update counter (ULPC) is zero (step 402), this means we have not done an update and the system requests the user via the synthesizer to, "Please say the name again." The update counter is incremented (step 403) and when there is a response an update of the template (step 404) is made using that response. The template is checked to determine if a good update occurred. If a good update did occur the user is asked to enter the phone number for that name (step 405). This may be keyed in or spoken in using voice recognition with speaker-independent recognition models. If the update fails the system proceeds to Add Entry Retry steps of Fig. 9. If the update fails the enroll and update utterances are swapped and the enrollment and update are attempted in that order. Often a user is not ready for speaking the first time and so an insertion such as "uh" (a gasp) might likely occur before the name is spoken but when we ask to say it again they are prepared to speak. The first template has the gasp of "uh" in it and when we do an update the update may fail because there is no "uh". When we swap utterances the cleaner second utterance is used for enrollment and we update with the first utterance, so the "uh" gasp on the beginning of the utterance is explained by the garbage model and the "uh" is not included in the template. If this swapping of the first and second utterance fails, a third utterance is requested via the out of tries (step 406) is requested and the response and the second utterance are used for the update. If a third utterance is requested for enrollment, then that name is checked first to see if it is too similar to another name on the list. If so it is not used, and processing proceeds to input A in Fig. 5. If the enrollment fails because the utterance was too short, the system will notify the subscriber and re-prompt for another utterance. If the enrollment succeeds, but the utterance (frame length) is too short (is less than the minimum length threshold), then the subscriber will be given a warning that poor recognition results may result because the enrollment name is too short. The subscriber is prompted to say "OKAY" or "CANCEL".

In summary, if an update fails, then the utterances are swapped, to see if the second utterance (or third if required) make a better enrollment utterance than the first. The following order if enrollment and updates is attempted, but only a maximum of three utterances are requested from the user.

| Enroll | Update |
|---|---|
| 1 | 2 |
| 2 | 1 |
| 2 | 3 |
| 3 | 2 |
| 3 | 1 |
| 1 | 3 |

## Claims

1. A method of enrolling speed dial names in a telephone comprising:
providing a garbage model (600) for speech recognition;
assigning a penalty to the garbage model;
receiving an utterance of a new speed dial name from a user (210);
comparing the utterance with the penalized garbage model and templates of previously added speed dial names to determine whether the utterance is too similar to a previously added speed dial name (205); and
responsive to the first utterance not being too similar to a previously added speed dial name, enrolling the new speed dial name in a speed dial list (211).

2. The method of claim 1, wherein the enrolling step (211) comprises:
enrolling the utterance by generating a template for the new speed dial name (301);
storing the template (305); and
requesting and adding a telephone number to be associated with the new speed dial name (405).

3. The method of claim 1, further comprising:
adjusting the penalty model to change the sensitivity of the comparing step in matching the utterance to the penalized garbage model or to the templates of previously added speed dial names.

4. The method of claim 1, further **characterized by** the enrolling step (211) comprising:
generating a first template from the utterance of the new speed dial name (301);
receiving a second utterance of the new speed dial name;
comparing the second utterance to the first template to determine whether the second utterance matches the first template; and
responsive to determining that the second utterance is a match, adding a template corresponding to the new speed dial name to a speed dial list.

5. The method of claim 4, further comprising:
responsive to determining that the second utterance is a match, updating the first template using the second utterance;
and wherein the adding step adds the updated first template to the speed dial list.

6. The method of claim 4, wherein the comparing step compares in-vocabulary portions of the second utterance to the first template.

7. The method of claim 4, further **characterized by**:
prior to receiving the second utterance, requesting the user to repeat the new speed dial name (410).

8. The method of claim 4, further comprising:
responsive to determining that the second utterance is a match, requesting and adding a telephone number to be associated with said new speed dial name (405).

9. The method of claim 4, further **characterized by**:
responsive to the comparing step determining that the second utterance is not a match:
enrolling the second utterance by generating a second template from the second utterance;
comparing the first utterance to the second template, to determine whether the first utterance matches the second template; and
responsive to determining that the first utterance is a match, adding a template corresponding to the new speed dial name to the speed dial list.

10. The method of claim 9, wherein the step of comparing the first utterance to the second template compares in-vocabulary portions of the first utterance to the second template.

11. The method of claim 10, further **characterized by**:
responsive to determining that the first utterance is a match, updating the second template using in-vocabulary portions of the first utterance;
and wherein the adding step adds the updated second template to the speed dial list.

12. The method of claim 9 further **characterized by**:
responsive to determining that the first utterance is not a match:
comparing the third utterance to the second template, to determine whether the third utterance matches the second template; and
responsive to determining that the third utterance is a match, updating the second template using the third utterance; and
adding the updated second template to the speed dial list.

13. The method of claim 12 wherein the step of comparing the third utterance to the second template compares in-vocabulary portions of the third utterance to the second template; and
wherein the step of updating the second template using the third utterance uses in-vocabulary portions of the third utterance.

14. The method of claim 1, further **characterized by**:
determining whether the utterance has a length that is longer than a threshold (302);
wherein the enrolling step is performed responsive to the length of the utterance being longer than the threshold.

15. The method of claim 14, further **characterized by**:
responsive to the length of the first utterance not being longer than the threshold, requesting an input from the user to continue or cancel the enrolling of the new speed dial name (310);
wherein the enrolling step is performed responsive to a user input to continue the enrolling of the new speed dial name.

16. A telephone apparatus (10) including circuitry for enrolling speed dial names, the circuitry comprising:
a memory (15) for storing a speed dial list, including a plurality of templates for previously added speed dial names, and for storing a garbage model (600) for speech recognition; and
a processor (12), programmed to perform a sequence of operations comprising:
assigning a penalty to the garbage model;
receiving an utterance of a new speed dial name from a user (210);
comparing the utterance with the penalized garbage model and stored plurality of templates to determine whether the first utterance is too similar to a previously added speed dial name (205); and
responsive to the utterance not being too similar to a previously added speed dial name, enrolling the new speed dial name in a speed dial list (211).

17. The telephone apparatus of claim 16, wherein the enrolling operation (211) comprises:
enrolling the utterance by generating a template for the new speed dial name (301);
storing the generated template in the memory (305); and
requesting and storing a telephone number associated with the new speed dial name (405).

18. The telephone apparatus of claim 16, wherein the sequence of operations further comprises:
adjusting the penalty model to change the sensitivity of the comparing step in matching the utterance to the penalized garbage model or to the templates of previously added speed dial names.

19. The telephone apparatus of claim 16, wherein the enrolling operation (211) further comprises:
enrolling a first template from the utterance (301);
receiving a second utterance of the new speed dial name;
comparing the second utterance to the first template to determine whether the second utterance matches the first template; and
responsive to determining that the second utterance is a match, adding a template corresponding to the new speed dial name to a speed dial list.

20. The telephone apparatus of claim 19, further **characterized by**:
responsive to determining that the second utterance is a match, updating the first template using the second utterance; and
adding the updated template to the speed dial list in memory.

21. The telephone apparatus of claim 20, wherein the memory is also for storing a garbage model for unrecognized speech;
and further **characterized by**:
the comparing operation comparing in-vocabulary portions of the second utterance to the first template.

22. The telephone apparatus of claim 19 further **characterized by** means for storing, in memory, a telephone number associated with the added speed dial name.

23. The telephone apparatus of claim 19 further **characterized by** the sequence of operations further comprising:
responsive to the comparing step determining that the second utterance is not a match:
enrolling the second utterance by generating a second template from the second utterance;
comparing the first utterance to the second template, to determine whether the first utterance matches the second template; and
responsive to determining that the first utterance is a match, adding a template corresponding to the new speed dial name to the speed dial list.

24. The telephone apparatus of claim 23 further **characterized by** the sequence of operations further comprising:
responsive to determining that the first utterance is not a match:
requesting and receiving a third utterance of the new speed dial name;
comparing the third utterance to the second template, to determine whether the third utterance matches the second template; and
responsive to determining that the third utterance is a match, updating the second template using the third utterance; and
adding the updated second template to the speed dial list.

25. The telephone apparatus of claim 16, further **characterized by** the sequence of operations further comprising:
determining whether the first utterance has a length that is longer than a threshold (302); and
enrolling the first template from the first utterance responsive to the length of the first utterance being longer than the threshold.

26. The telephone apparatus of claim 25 further **characterized by** the sequence of operations further comprising:
responsive to the length of the first utterance not being longer than the threshold, requesting an input from the user to continue or cancel the enrolling of the new speed dial name (310); and
enrolling the first template from the first utterance responsive to receiving a user input to continue the enrolling of the new speed dial name.

## Patentansprüche

1. Verfahren zum Eintragen von Kurzwahlnamen in einem Telephon, das umfasst:
Vorsehen eines Müllmodells (600) zur Spracherkennung;
Zuweisen einer Strafe an das Müllmodell;
Empfangen einer Äußerung eines neuen Kurzwahlnamens von einem Anwender (210);
Vergleichen der Äußerung mit dem mit Strafe belegten Müllmodell und mit Schablonen früher hinzugefügter Kurzwahlnamen, um festzustellen, ob die Äußerung zu einem früher hinzugefügten Kurzwahlnamen (205) zu ähnlich ist; und
in Reaktion darauf, dass die erste Äußerung zu einem früher hinzugefügten Kurzwahlnamen nicht zu ähnlich ist, Eintragen des neuen Kurzwahlnamens in eine Kurzwahlliste (211).

2. Verfahren nach Anspruch 1, bei dem der Eintragungsschritt (211) umfasst:
Eintragen der Äußerung durch Erzeugen einer Schablone für den neuen Kurzwahlnamen (301);
Speichern der Schablone (305); und
Anfordern und Hinzufügen einer Telephonnummer, die dem neuen Kurzwahlnamen (405) zugeordnet werden soll.

3. Verfahren nach Anspruch 1, das ferner umfasst:
Einstellen des Strafmodells, um die Empfindlichkeit des Vergleichsschritts bei der Anpassung der Äußerung an das mit Strafe belegte Müllmodell oder an die Schablonen früher hinzugefügter Kurzwahlnamen zu ändern.

4. Verfahren nach Anspruch 1, ferner **dadurch gekennzeichnet, dass** der Eintragungsschritt (211) umfasst:
Erzeugen einer ersten Schablone aus der Äußerung des neuen Kurzwahlnamens (301);
Empfangen einer zweiten Äußerung des neuen Kurzwahlnamens;
Vergleichen der zweiten Äußerung mit der ersten Schablone, um festzustellen, ob die zweite Äußerung mit der ersten Schablone übereinstimmt; und
in Reaktion auf die Feststellung, dass die zweite Äußerung eine Übereinstimmung ergibt, Hinzufügen einer dem neuen Kurzwahlnamen entsprechenden Schablone zu einer Kurzwahlliste.

5. Verfahren nach Anspruch 1, das ferner umfasst:
in Reaktion auf die Feststellung, dass die zweite Äußerung eine Übereinstimmung ergibt, Aktualisieren der ersten Schablone unter Verwendung der zweiten Äußerung;
und wobei der Hinzufügungsschritt die aktualisierte erste Schablone zu der Kurzwahlliste hinzufügt.

6. Verfahren nach Anspruch 4, bei dem der Vergleichsschritt vokabularinterne Abschnitte der zweiten Äußerung mit der ersten Schablone vergleicht.

7. Verfahren nach Anspruch 4, ferner **dadurch gekennzeichnet, dass**:
vor dem Empfang der zweiten Äußerung der Anwender aufgefordert wird, den neuen Kurzwahlnamen (410) zu wiederholen.

8. Verfahren nach Anspruch 4, das ferner umfasst:
in Reaktion auf die Feststellung, dass die zweite Äußerung eine Übereinstimmung ergibt, Anfordern und Hinzufügen einer Telephonnummer, die dem neuen Kurzwahlnamen (405) zugeordnet werden soll.

9. Verfahren nach Anspruch 4, ferner **gekennzeichnet durch**:
in Reaktion auf den Vergleichsschritt Feststellen, dass die zweite Äußerung keine Übereinstimmung ergibt;
Eintragen der zweiten Äußerung **durch** Erzeugen einer zweiten Schablone aus der zweiten Äußerung;
Vergleichen der ersten Äußerung mit der zweiten Schablone, um festzustellen, ob die erste Äußerung mit der zweiten Schablone übereinstimmt; und
in Reaktion auf die Feststellung, dass die erste Äußerung eine Übereinstimmung ergibt, Hinzufügen einer dem neuen Kurzwahlnamen entsprechenden Schablone zu der Kurzwahlliste.

10. Verfahren nach Anspruch 9, bei dem der Schritt des Vergleichens der ersten Äußerung mit der zweiten Schablone vokabularinterne Abschnitte der ersten Äußerung mit der zweiten Schablone vergleicht.

11. Verfahren nach Anspruch 10, ferner **gekennzeichnet durch**:
in Reaktion auf die Feststellung, dass die erste Äußerung eine Übereinstimmung ergibt, Aktualisieren der zweiten Schablone unter Verwendung von vokabularinternen Abschnitten der ersten Äußerung;
wobei der Hinzufügungsschritt die aktualisierte zweite Schablone zu der Kurzwahlliste hinzufügt.

12. Verfahren nach Anspruch 9, ferner **dadurch gekennzeichnet, dass**:
in Reaktion auf die Feststellung, dass die erste Äußerung keine Übereinstimmung ergibt:
die dritte Äußerung mit der zweiten Schablone verglichen wird, um festzustellen, ob die dritte Äußerung mit der zweiten Schablone übereinstimmt; und
in Reaktion auf die Feststellung, dass die dritte Äußerung eine Übereinstimmung ergibt, die zweite Schablone unter Verwendung der dritten Äußerung aktualisiert wird; und
die aktualisierte zweite Schablone zu der Kurzwahlliste hinzugefügt wird.

13. Verfahren nach Anspruch 12, bei dem der Schritt des Vergleichens der dritten Äußerung mit der zweiten Schablone vokabularinterne Abschnitte der dritten Äußerung mit der zweiten Schablone vergleicht; und
wobei der Schritt des Aktualisierens der zweiten Schablone unter Verwendung der dritten Äußerung vokabularinterne Abschnitte der dritten Äußerung verwendet.

14. Verfahren nach Anspruch 1, ferner **dadurch gekennzeichnet, dass**:
festgestellt wird, ob die Äußerung eine Länge besitzt, die länger als ein Schwellenwert (302) ist;
wobei der Eintragungsschritt in Reaktion auf die Tatsache ausgeführt wird, dass die Länge der Äußerung länger ist als der Schwellenwert.

15. Verfahren nach Anspruch 14, ferner **dadurch gekennzeichnet, dass**:
in Reaktion auf die Tatsache, dass die Länge der ersten Äußerung nicht länger als der Schwellenwert ist, eine Eingabe von dem Anwender angefordert wird, um die Eintragung des neuen Kurzwahlnamens (310) fortzusetzen oder zu beenden;
wobei der Eintragungsschritt in Reaktion auf eine Anwendereingabe ausgeführt wird, um die Eintragung des neuen Kurzwahlnamens fortzusetzen.

16. Telephonapparat (10), der eine Schaltungsanordnung zum Eintragen von Kurzwahlnamen enthält, wobei die Schaltungsanordnung umfasst:
einen Speicher (15) zum Speichern einer Kurzwahlliste einschließlich mehrerer Schablonen für früher hinzugefügte Kurzwahlnamen und zum Speichern eines Müllmodells (600) zur Spracherkennung; und
einen Prozessor (12), der so programmiert ist, dass er eine Folge von Operationen ausführt, die umfassen:
Zuweisen einer Strafe zu dem Müllmodell;
Empfangen einer Äußerung eines neuen Kurzwahlnamens von einem Anwender (210);
Vergleichen der Äußerung mit dem mit Strafe belegten Müllmodell und mit mehreren gespeicherten Schablonen, um festzustellen, ob die erste Äußerung zu einem früher hinzugefügten Kurzwahlnamen (205) zu ähnlich ist; und
in Reaktion auf die Tatsache, dass die Äußerung zu einem früher hinzugefügten Kurzwahlnamen nicht zu ähnlich ist, Eintragen des neuen Kurzwahlnamens in eine Kurzwahlliste (211).

17. Telephonapparat nach Anspruch 16, bei dem die Eintragungsoperation (211) umfasst:
Eintragen der Äußerung durch Erzeugen einer Schablone für den neuen Kurzwahlnamen (301);
Speichern der erzeugten Schablone in dem Speicher (305); und
Anfordern und Speichern einer Telephonnummer, die dem neuen Kurzwahlnamen (405) zugeordnet werden soll.

18. Telephonapparat nach Anspruch 16, bei dem die Folge von Operationen ferner umfasst:
Einstellen des Strafmodells, um die Empfindlichkeit des Vergleichsschrittes hinsichtlich der Übereinstimmung der Äußerung mit dem mit Strafe belegten Müllmodell oder mit den Schablonen von früher hinzugefügten Kurzwahlnamen zu ändern.

19. Telephonapparat nach Anspruch 16, bei dem die Eintragungsoperation (211) ferner umfasst:
Eintragen einer ersten Schablone aus der Äußerung (301);
Empfangen einer zweiten Äußerung des neuen Kurzwahlnamens;
Vergleichen der zweiten Äußerung mit der ersten Schablone, um festzustellen, ob die zweite Äußerung mit der ersten Schablone übereinstimmt; und
in Reaktion auf die Feststellung, dass die zweite Äußerung eine Übereinstimmung ergibt, Hinzufügen einer dem neuen Kurzwahlnamen entsprechenden Schablone zu einer Kurzwahlliste.

20. Telephonapparat nach Anspruch 19, ferner **dadurch gekennzeichnet, dass**:
in Reaktion auf die Feststellung, dass die zweite Äußerung eine Übereinstimmung ergibt, die erste Schablone unter Verwendung der zweiten Äußerung aktualisiert wird; und
die aktualisierte Schablone zu der Kurzwahlliste im Speicher hinzugefügt wird.

21. Telephonapparat nach Anspruch 20, bei dem der Speicher auch der Speicherung eines Müllmodells für nicht erkannte Sprache dient;
und ferner **dadurch gekennzeichnet, dass**:
die Vergleichsoperation vokabularinterne Abschnitte der zweiten Äußerung mit der ersten Schablone vergleicht.

22. Telephonapparat nach Anspruch 19, ferner **gekennzeichnet durch** Mittel, die in einem Speicher eine dem hinzugefügten Kurzwahlnamen zugeordnete Telephonnummer speichern.

23. Telephonapparat nach Anspruch 19, ferner **dadurch gekennzeichnet, dass** die Folge von Operationen ferner umfasst:
in Reaktion darauf, dass in dem Vergleichsschritt eine Übereinstimmung mit der zweiten Äußerung festgestellt wird:
Eintragen der zweiten Äußerung durch Erzeugen einer zweiten Schablone aus der zweiten Äußerung;
Vergleichen der ersten Äußerung mit der zweiten Schablone, um festzustellen, ob die erste Äußerung mit der zweiten Schablone übereinstimmt; und
in Reaktion auf die Feststellung, dass die erste Äußerung eine Übereinstimmung ergibt, Hinzufügen einer Schablone, die dem neuen Kurzwahlnamen entspricht, zu der Kurzwahlliste.

24. Telephonapparat nach Anspruch 23, ferner **dadurch gekennzeichnet, dass** die Folge von Operationen ferner umfasst:
in Reaktion auf die Feststellung, dass die erste Äußerung keine Übereinstimmung ergibt:
Anfordern und Empfangen einer dritten Äußerung des neuen Kurzwahlnamens;
Vergleichen der dritten Äußerung mit der zweiten Schablone, um festzustellen, ob die dritte Äußerung mit der zweiten Schablone übereinstimmt; und
in Reaktion auf die Feststellung, dass die dritte Äußerung eine Übereinstimmung ergibt, Aktualisieren der zweiten Schablone unter Verwendung der dritten Äußerung; und
Hinzufügen der aktualisierten zweiten Schablone zu der Kurzwahlliste.

25. Telephonapparat nach Anspruch 16, ferner **dadurch gekennzeichnet, dass** die Folge von Operationen ferner umfasst:
Feststellen, ob die erste Äußerung eine Länge hat, die länger ist als ein Schwellenwert (302); und
Eintragen der ersten Schablone aus der ersten Äußerung in Reaktion auf die Tatsache, dass die Länge der ersten Äußerung länger als der Schwellenwert ist.

26. Telephonapparat nach Anspruch 25, ferner **dadurch gekennzeichnet, dass** die Folge von Operationen ferner umfasst:
in Reaktion auf die Tatsache, dass die Länge der ersten Äußerung nicht länger als der Schwellenwert ist, Anfordern einer Eingabe von dem Anwender, um die Eintragung des neuen Kurzwahlnamens (310) fortzusetzen oder zu beenden; und
Eintragen der ersten Schablone aus der ersten Äußerung in Reaktion auf den Empfang einer Anwendereingabe, um die Eintragung des neuen Kurzwahlnamens fortzusetzen.

## Revendications

1. Procédé permettant d'enregistrer des noms à numérotation rapide dans un téléphone comprenant les étapes consistant à :
fournir un schéma de données corrompues (600) pour une reconnaissance vocale ;
affecter une pénalité au schéma de données corrompues ;
recevoir, d'un utilisateur (210),un énoncé d'un nouveau nom à numérotation rapide ;
comparer l'énoncé avec le schéma de données corrompues pénalisé et les modèles de noms à numérotation rapide ajoutés précédemment pour déterminer si l'énoncé est trop similaire à un nom à numérotation rapide (205) ajouté précédemment ; et
en réponse au premier énoncé n'étant pas trop similaire à un nom à numérotation rapide ajouté précédemment, enregistrer le nouveau nom à numérotation rapide dans une liste à numérotation rapide (211).

2. Procédé selon la revendication 1, dans lequel l'étape d'enregistrement (211) comprend les étapes consistant à :
enregistrer l'énoncé en générant un modèle du nouveau nom à numérotation rapide (301) ;
stocker le modèle (305) ; et
demander et ajouter un numéro de téléphone à associer au nouveau nom à numérotation rapide (405).

3. Procédé selon la revendication 1, comprenant en outre les étapes consistant à :
ajuster le schéma de pénalité pour changer la sensibilité de l'étape de comparaison en faisant correspondre l'énoncé au schéma de données corrompues pénalisé ou aux modèles de noms à numérotation rapide ajoutés précédemment.

4. Procédé selon la revendication 1, **caractérisé en outre par le fait que** l'étape d'enregistrement (211) comprend les étapes consistant à :
générer un premier modèle à partir de l'énoncé du nouveau nom à numérotation rapide (301) ;
recevoir un deuxième énoncé du nouveau nom à numérotation rapide ;
comparer le deuxième énoncé avec le premier modèle pour déterminer si le deuxième énoncé correspond au premier modèle ; et
en réponse à la détermination selon laquelle le deuxième énoncé est équivalent, ajouter un modèle correspondant au nouveau nom à numérotation rapide dans une liste à numérotation rapide.

5. Procédé selon la revendication 4, comprenant en outre les étapes consistant à :
en réponse à la détermination selon laquelle le deuxième énoncé est une équivalence, mettre à jour le premier modèle en utilisant le deuxième énoncé ;
et dans lequel l'étape d'ajout ajoute le premier modèle mis à jour dans la liste à numérotation rapide.

6. Procédé selon la revendication 4, dans lequel l'étape de comparaison compare les parties de vocabulaire du deuxième énoncé avec le premier modèle.

7. Procédé selon la revendication 4, **caractérisé en outre par** :
avant de recevoir le deuxième énoncé, la demande à l'utilisateur de répéter le nouveau nom à numérotation rapide (410).

8. Procédé selon la revendication 4, comprenant en outre :
en réponse à la détermination selon laquelle le deuxième énoncé est une équivalence, la demande et l'ajout d'un numéro de téléphone à associer au dit nouveau nom à numérotation rapide (405).

9. Procédé selon la revendication 4, **caractérisé en outre par** les étapes consistant à :
en réponse à l'étape de comparaison déterminant que le deuxième énoncé n'est pas une équivalence,
enregistrer le deuxième énoncé en générant un deuxième modèle à partir du deuxième énoncé;
comparer le premier énoncé avec le deuxième modèle, pour déterminer si le premier énoncé correspond au deuxième modèle ; et
en réponse à la détermination selon laquelle la premier énoncé est équivalent, ajouter un modèle correspondant au nouveau nom à numérotation rapide dans la liste à numérotation rapide.

10. Procédé selon la revendication 9, dans lequel l'étape de comparaison du premier énoncé avec le deuxième modèle compare les parties de vocabulaire du premier énoncé avec le deuxième modèle.

11. Procédé selon la revendication 10, **caractérisé en outre par** :
en réponse à la détermination selon laquelle la premier énoncé est une équivalence, la mise à jour du deuxième modèle en utilisant les parties de vocabulaire du premier énoncé ;
et dans lequel l'étape d'ajout ajoute le deuxième modèle mis à jour dans la liste à numérotation rapide.

12. Procédé selon la revendication 9 **caractérisé en outre par** :
en réponse à la détermination selon laquelle le premier énoncé n'est pas une équivalence,
la comparaison du troisième énoncé avec le deuxième modèle, pour déterminer si le troisième énoncé correspond au deuxième modèle ; et
en réponse à la détermination selon laquelle le troisième énoncé est une équivalence, mettre à jour le deuxième modèle en utilisant le troisième énoncé ;et
l'ajout du deuxième modèle mis à jour dans la liste à numérotation rapide.

13. Procédé selon la revendication 12, dans lequel l'étape de comparaison du troisième énoncé avec le deuxième modèle compare les parties de vocabulaire du troisième énoncé avec le deuxième modèle ; et
dans lequel l'étape de mise à jour du deuxième modèle en utilisant le troisième énoncé utilise les parties de vocabulaire du troisième énoncé.

14. Procédé selon la revendication 1, **caractérisé en outre par** :
la détermination si l'énoncé a une longueur qui est supérieure à un seuil (302) ;
dans lequel l'étape d'enregistrement est exécutée en réponse à la longueur de l'énoncé étant supérieure au seuil.

15. Procédé selon la revendication 14, **caractérisé en outre par** :
en réponse à la longueur du premier énoncé n'étant pas supérieure au seuil, la demande d'une entrée à l'utilisateur pour continuer ou annuler l'enregistrement du nouveau nom à numérotation rapide (310) ;
dans lequel l'étape d'enregistrement est exécutée en réponse à une entrée de l'utilisateur pour continuer l'enregistrement du nouveau nom à numérotation rapide.

16. Appareil de téléphone (10) incluant des circuits pour enregistrer des noms à numérotation rapide, les circuits comprenant :
une mémoire (15) destinée à stocker une liste à numérotation rapide, comprenant une pluralité de modèles de noms à numérotation rapide ajoutés précédemment, et à stocker un schéma de données corrompues (600) pour une reconnaissance vocale ; et
un processeur (12), programmé pour exécuter une séquence d'opérations comprenant :
l'assignement d'une pénalité au schéma de données corrompues ;
la réception d'un énoncé d'un nouveau nom à numérotation rapide à partir d'un utilisateur (210) ;
la comparaison de l'énoncé avec le schéma de données corrompues pénalisé et la pluralité de modèles stockés pour déterminer si le premier énoncé est trop similaire à un nom à numérotation rapide (205) ajouté précédemment ; et
en réponse à l'énoncé n'étant pas trop similaire à un nom à numérotation rapide ajouté précédemment, l'enregistrement du nouveau nom à numérotation rapide dans une liste à numérotation rapide (211).

17. Appareil de téléphone selon la revendication 16, dans lequel l'opération d'enregistrement (211) comprend les étapes consistant à
enregistrer l'énoncé en générant un modèle du nouveau nom à numérotation rapide (301) ;
stocker le modèle généré dans la mémoire (305) ; et
demander et stocker un numéro de téléphone associé au nouveau nom à numérotation rapide (405).

18. Appareil de téléphone selon la revendication 16, dans lequel la séquence d'opérations comprend en outre :
l'ajustement du schéma de pénalité pour changer la sensibilité de l'étape de comparaison en faisant correspondre l'énoncé au schéma de données corrompues pénalisé ou aux modèles de noms à numérotation rapide ajoutés précédemment.

19. Appareil de téléphone selon la revendication 16, dans lequel l'opération d'enregistrement (211) comprend en outre les étapes consistant à :
enregistrer un premier modèle à partir de l'énoncé (301) ;
recevoir un deuxième énoncé du nouveau nom à numérotation rapide ;
comparer le deuxième énoncé avec le premier modèle pour déterminer si le deuxième énoncé correspond au premier modèle ; et
en réponse à la détermination selon laquelle le deuxième énoncé est une équivalence, ajouter un modèle correspondant au nouveau nom à numérotation rapide dans une liste à numérotation rapide.

20. Appareil de téléphone selon la revendication 19, **caractérisé en outre par** les étapes consistant à :
en réponse à la détermination selon laquelle le deuxième énoncé est une équivalence, mettre à jour le premier modèle en utilisant le deuxième énoncé ; et
ajouter le modèle mis à jour dans la liste à numérotation rapide stockée en mémoire.

21. Appareil de téléphone selon la revendication 20, dans lequel la mémoire sert également à stocker un schéma de données corrompues de mots non reconnus ;
et **caractérisé en outre par** :
l'opération de comparaison comparant les parties de vocabulaire du deuxième énoncé avec le premier modèle.

22. Appareil de téléphone selon la revendication 19, **caractérisé en outre par** des moyens pour stocker, en mémoire, un numéro de téléphone associé au nom à numérotation rapide ajouté.

23. Appareil de téléphone selon la revendication 19, **caractérisé en outre par le fait que** la séquence d'opérations comprend en outre :
en réponse à l'étape de comparaison déterminant que le deuxième énoncé n'est pas une équivalence,
l'enregistrement du deuxième énoncé en générant un deuxième modèle à partir du deuxième énoncé ;
la comparaison du premier énoncé avec le deuxième modèle, pour déterminer si le premier énoncé correspond au deuxième modèle ; et
en réponse à la détermination selon laquelle le premier énoncé est une équivalence, l'ajout d'un modèle correspondant au nouveau nom à numérotation rapide dans la liste à numérotation rapide.

24. Appareil de téléphone selon la revendication 23, **caractérisé en outre par le fait que** la séquence d'opérations comprend :
en réponse à la détermination selon laquelle le premier énoncé n'est pas une équivalence,
la demande et la réception d'un troisième énoncé du nouveau nom à numérotation rapide ;
la comparaison du troisième énoncé avec le deuxième modèle, pour déterminer si le troisième énoncé correspond au deuxième modèle ; et
en réponse à la détermination selon laquelle le troisième énoncé est une équivalence, la mise à jour du deuxième modèle en utilisant le troisième énoncé ; et
l'ajout du deuxième modèle mis à jour dans la liste à numérotation rapide.

25. Appareil de téléphone selon la revendication 16, **caractérisé en outre par le fait que** la séquence d'opérations comprend en outre les étapes consistant à :
déterminer si le premier énoncé a une longueur qui est supérieure à un seuil (302) ; et
enregistrer le premier modèle à partir du premier énoncé en réponse à la longueur du premier énoncé étant supérieure au seuil.

26. Appareil de téléphone selon la revendication 25, **caractérisé en outre par le fait que** la séquence d'opérations comprend en outre les étapes consistant à :
en réponse à la longueur du premier énoncé n'étant pas supérieure au seuil, demander une entrée à l'utilisateur pour continuer ou annuler l'enregistrement du nouveau nom à numérotation rapide (310) ; et
enregistrer le premier modèle à partir du premier énoncé en réponse à la réception d'une entrée de l'utilisateur pour continuer l'enregistrement du nouveau nom à numérotation rapide.
